# EUROPEAN PATENT APPLICATION

(11) **EP 4 518 581 A1**
(43) Date of publication of application: **05.03.2025**
(21) Application number: 23382893.8
(22) Date of filing: 04.09.2023
(51) Int. Cl.: H05B 6/06, H05B 6/12, H02J 50/12, H02J 50/40

(54) **INDUCTION COOKING AND POWERING COOKING APPLIANCES**

(71) Applicant: Cloen Europa, s.l., 46930 Quart de Poblet (VA) (ES)
(72) Inventor: CERRA QUINTANA, Pablo Esteban, 46004 Valencia (ES)
(74) Representative: Patentanwälte Bauer Vorberg Kayser

(57) **Abstract**

The invention relates to a method for wireless transmission of energy by means of a system for cooking and/or powering induction cooking appliances, the method comprising: Applying first voltage pulses (1) to a first coil forming part of the system, the first voltage pulses (1) being separated in time from each other so that the first coil generates a first alternating electromagnetic field, and applying second voltage pulses (2) to a second coil forming part of the system, the voltage pulses of the second coil (2) are separated in time from each other so that the second coil generates a second alternating electromagnetic field, wherein the voltage pulses of the first coil (1) and the voltage pulses of the second coil (2) are coordinated in time with each other. The invention further relates to a system for induction cooking and/or powering cooking appliances, to a control device for such a system, and to a software product for controlling the wireless transmission of energy by such a system.

## Description

The present invention relates to a method for wireless power transmission by a system for induction cooking and/or powering cooking appliances. The invention further relates to a system for induction cooking and/or powering cooking appliances. Furthermore, the invention relates to a control device for a system for induction cooking and/or powering cooking appliances. The invention also relates to an algorithm that controls and optimises the wireless transmission of energy delivered to a system for induction cooking and/or powering cooking appliances and to a computer program product for controlling wireless power transmission by a system for induction cooking and/or powering cooking appliances.

Induction cooking is performed using electrical induction heating of cooking vessels, rather than relying on indirect radiation, convection, or thermal conduction.

Electromagnetic induction is based on Faraday's law and Lenz's law. When a changing current is applied to an induction coil located beneath a cooking surface of an induction cooktop, an alternating electromagnetic field is generated around the coil. The alternating electromagnetic field extends to cookware that has been placed on the cooktop. The cookware should be made of ferromagnetic material or have a ferromagnetic layer on its base for induction to work properly. The alternating electromagnetic field induces electric currents, known as Foucault currents or eddy currents, in the base of the cookware. These currents are generated due to the interaction between the alternating electromagnetic field and the conducting materials present in the cookware. Foucault currents generate heat in the bottom of the cookware due to the electrical resistance of the material. This heat is transferred to the inside of the cookware, thereby heating foods or liquids located therein. It is important to note that the heat is generated directly in the cookware and not in the induction cooktop itself, which allows for an efficient and quick heating process.

In addition to heating purposes, induction can also be used for wireless power transmission to electrical devices. For example, an electrical cooking appliance compatible with wireless power transmission can be placed on an induction cooktop or hob. The cooking appliance can be a blender, a citrus juicer, a toaster, a cooking robot or any other type of electrical appliance compatible with wireless power transmission. When a coil on the induction hob generates an alternating electromagnetic field, an alternating current is induced in a coil inside the electrical cooking appliance. In this way, the cooking appliance can be powered by simply placing it on the induction hob. The cooking appliance can be called electrical cooking appliance and/or induction cooking appliance for the best understanding of the present application.

A system for induction cooking and/or powering cooking appliances usually has more than one coil, so that multiple cookware items can be heated and multiple cooking appliances can be powered simultaneously. It has been observed that induction cooktops and related systems for wireless power transmission operate less efficiently when multiple coils are in use simultaneously.

It is therefore an objective of the present invention to provide a method which allows for a more efficient transmission of power by a system for induction cooking and/or powering cooking appliances when multiple coils are being operated simultaneously. It is a further objective of the present invention to provide a system for induction cooking and/or powering cooking appliances with an increased power transmission efficiency during simultaneous operation of more than one coil. Furthermore, it is an objective of the present invention to provide a control device for said system. According to another objective, an algorithm shall be provided that can control the wireless transmission of energy for the induction cooking system and/or power supply of cooking appliances in such a way as to make it more efficient, and, respectively, a computer program product shall be provided which can control wireless power transmission by a system for induction cooking and/or powering kitchen appliances in such a way that it is more efficient.

These objectives are achieved by the method, the systems and the computer program product or algorithm specified in patent claims 1, 12, 14, and 15, respectively. The dependent patent claims specify optional embodiments of the invention, the features of which may be freely combined with each other, if they are compatible from a technical viewpoint. Features from the dependent claims can also be combined with features from claims of different claim categories. Furthermore, all features and embodiments of the invention which are described subsequently can be freely combined with each other, as long as they are compatible with each other from a technical viewpoint.

A first aspect of the present invention relates to a method for wireless power transmission by a system for induction cooking and/or powering cooking appliances, comprising at least the following steps: Applying pulses of first voltage to a first coil which is part of the system, the pulses of first voltage being temporarily separated in time from each other so that the first coil generates a first alternating electromagnetic field; as well as applying pulses of second voltage to a second coil forming part of the system, the second voltage pulses being separated in time from each other so that the second coil generates a second alternating electromagnetic field; wherein the pulses of first voltage to the first coil and the pulses of second voltage to the second coil are coordinated in time with each other. In particular, the pulses of first voltage to the first coil and the pulses of second voltage to the second coil are offset in time for synchronisation.

The above-mentioned synchronisation of the voltage pulses of the first coil and the voltage pulses of the second coil can have the following advantages: Overlapping and interference of the electromagnetic waves emitted by the coils can be avoided or reduced. In addition, the power consumption of the system can be configured to be more uniform. For example, peaks in power consumption can be avoided. Optimal power transfer performance can be achieved. Electrical stress in the electrical installation can be reduced. The method ensures stable and reliable operation of wireless power transmission by systems for induction cooking and/or powering cooking appliances..

In general, pulses of first voltage to the first coil can be referred to as voltage pulses of the first coil or voltage pulses to the first coil or "first coil voltage pulses", while pulses of second voltage to the second coil can be referred to as voltage pulses of the second coil or voltage pulses to the second coil or "second coil voltage pulses" throughput the entire present application (hence, regarding the description of the method, but also of the system, of the control device, of the algorithm, and the entire components). Pulses of voltage can be generally referred to also as voltage pulses.

According to one embodiment of the invention, the voltage pulses may have a square shape. According to some embodiments of the invention, the voltage pulses of the first coil and the voltage pulses of the second coil may have the same peak voltage. According to other embodiments, the voltage pulses of the first coil and the voltage pulses of the second coil may have different peak voltages.

In the course of a method, in particular between two sequential voltage pulses in time, the voltage applied to the first coil and/or the second coil preferably is none, i.e. amounts to 0 V. According to another variant of the invention, it could also be realized that a baseline value which is different from 0 V may be chosen instead.

According to a preferred embodiment of the invention, a voltage of 325 V is applied to the first coil and to the second coil to create the voltage pulses. However, it is also possible to apply a different voltage, according to other embodiments.

According to other advantageous embodiments of the invention, the voltage pulses of the first coil and the voltage pulses of the second coil are applied with a relative offset in time from each other. According to some embodiments, this implies that the voltage pulses of the first coil and the voltage pulses of the second coil do not start at the same moment in time. It is also possible that the voltage pulses of the first coil and the voltage pulses of the second coil do not end at the same moment in time. According to some embodiments, the voltage pulses of the first coil and the voltage pulses of the second coil may differ in width.

According to another embodiment of the invention, the voltage pulses of the first coil and the voltage pulses of the second coil are coordinated in time such that there is only partial or no temporal overlap between the voltage pulses of the first coil and the voltage pulses of the second coil. This can serve to reduce overlap and interference of the electromagnetic waves emitted by the first and second coils.

According to some embodiments, the voltage pulses of the first coil and the voltage pulses of the second coil are coordinated in time such that rising voltage edges and/or falling voltage edges of the voltage pulses of the first coil do not coincide with rising voltage edges and/or falling voltage edges of the voltage pulses of the second coil. This implies that the voltage maxima of the first coil voltage pulses and the second coil voltage pulses do not occur at the same time. The rising and falling voltage edges are accompanied by a change in the electromagnetic field generated by the coils and are therefore relevant for electromagnetic induction. Electromagnetic interference is reduced if the voltage maxima of different coils do not coincide.

According to another embodiment, the voltage pulses of the first coil and the voltage pulses of the second coil are coordinated in time such that interference between the first alternating electromagnetic field generated by the first coil and the second alternating electromagnetic field generated by the second coil is reduced. To achieve this, overlapping maxima between the voltage pulses of the first coil and the voltage pulses of the second coil can be avoided. In addition, the voltage pulses can be separated from each other by a safety margin.

According to some implementations, the voltage pulses of the first coil and the voltage pulses of the second coil are coordinated in time in such a way that the total power consumption of the system is stabilized. Peaks in power consumption should be avoided, as they may exceed a maximum capacity of an available electrical supply. In fact, power consumption peaks may affect the stability of an electrical grid and cause disruption or even damage to other connected devices. According to some embodiments, stabilization is achieved by reducing or avoiding a temporal overlap between the maxima of the voltage pulses of the first coil and the voltage pulses of the second coil. However, further criteria may be taken into account for purposes of temporal coordination of the pulses. For instance, a specific power consumption of each coil may be observed. Therefore, the control pulse widths of the specific coil can be completely reduced on a coil. In addition, the pulse width applied to a specific coil can be regulated. The previously mentioned measures may serve to avoid peaks in power consumption by the complete system.

According to other embodiments, pulses of further voltage are applied to an additional coil that is part of the system, the pulses of further voltage being separated in time from each other so that the additional coil generates an additional alternating electromagnetic field, wherein the pulses of further voltage are coordinated in time with reference to the pulses of first voltage to the first coil and the pulses of second voltage to the second coil. The present method may be employed in a system featuring three, four or more coils. The voltage pulses applied to these coils can be coordinated in time, according to various embodiments. In particular, voltage pulses can be applied to different coils with an offset in time from each other.

The pulses of further voltage to the additional coil (or also "further coil") could also be referred to as "further voltage pulses" or "additional voltage pulses" or "pulses of additional voltage".

Furthermore, voltage pulses can be coordinated in time such that there is only partial or no time overlap between the voltage pulses of each coil (i.e. that, for example, there is only partial or no time overlap between the pulses of first voltage to the first coil and the pulses of second voltage to the second coil and - if present - the pulses of further voltage to the additional coil). With a higher number of coils, the algorithm can avoid overlaps in the timing of voltage pulses that are applied to different coils, or to reduce or minimize the duration of temporal overlaps of pulses that are being applied to different coils. In the presence of more than two coils, voltages pulses may be coordinated in time in such a way that interferences between alternating electromagnetic fields generated by the coils are prevented or reduced. Furthermore, the voltage pulses at the first coil, the second coil and - if present - the additional coil may be coordinated in time in order to stabilize a total power consumption by the system.

The aforementioned approaches for pulse coordination may be based on advanced control and synchronization algorithms. According to a preferable embodiment of the invention, the pulse coordination may be performed dynamically, i.e., during system run-time. Pulse coordination may take into account an energy demand of cooking appliances connected to the system in order to optimize energy transfer. Alternatively, pulse activation schedules for the different coils may be created/prepared before system run-time.

According to a preferred embodiment of the present invention, the system for induction cooking and/or powering cooking appliances is an induction cooktop. The induction cooktop may feature a cooking surface on which cookware items and/or cooking appliances may be placed. In particular, the induction cooktop may feature two or more coils, said coils being located underneath the cooking surface. According to other embodiments of the invention, the system only comprises two or more coils and one or more devices for powering and/or controlling the coils. The coils and their associated power and/or control devices may be installed in any cooktop or related kitchen fixture.

According to some embodiments, the pulses of first voltage to the first coil and the pulses of second voltage to the second coil are applied to the coils at a frequency of 30 kHz. Those skilled in the arts will appreciate that further voltage pulses, being applied to a further coil ("additional coil") of the system, may also be applied at a frequency of 30 kHz. The choice of this frequency for energy transfer is based on technical considerations and offers several significant benefits. Firstly, the frequency of 30 kHz falls within an optimal range for efficient energy transfer in induction applications. At this frequency, energy losses due to electrical resistance and other undesired effects are minimized. This means that high energy transfer efficiency can be achieved, maximizing the amount of energy transmitted to cookware items or cooking appliances. Furthermore, the frequency of 30 kHz allows for appropriate response of the electronic components used in the system. According to some embodiments, transistors, capacitors, and other power electronics elements are designed and optimized to operate at this frequency, contributing to a higher efficiency and a higher reliability of energy transfer.

Another important benefit of using a 30 kHz frequency is the ability to minimize electromagnetic interference with other electronic devices. By selecting a specific frequency, collisions and interference issues with other sources of electromagnetic energy present in the environment are avoided. This ensures reliable and interference-free operation for both the system according to the present invention and other nearby electronic devices. However, those skilled in the arts will appreciate that different frequencies may be employed, as well.

According to a further advantageous embodiment, the application of the pulses of first voltage to the first coil and the application of the pulses of second voltage to the second coil are coordinated by a system control device (control device of the system). In other words, the control device may provide for pulse synchronization across multiple coils. According to some embodiments, the control device may also coordinate the application of the pulses of further voltage (to an additional coil). According to advantageous implementations, the control device may be a microcontroller, a computer, a computer processor, or another integrated circuit device.

According to a further embodiment, the control device may store and/or create a schedule for the application of pulses of first voltage to the first coil, of pulses of second voltage to the second coil, and possibly of pulses of further voltage to additional coils. The time coordination of the voltage pulses may include a programmed preparation for the application of the pulses. In particular, the temporal coordination of the voltage pulses may comprise a creation and/or an assignment of pulse control settings. The pulse control settings may contain a pulse width, a temporal offset of a rising pulse flank, a temporal offset of a falling pulse flank, and/or a pulse frequency. Different settings may be assigned to or created for each coil, according to the needs. According to other implementations, the control device stores the coordination settings, such as the aforementioned pulse control settings, or other configuration information required for scheduling the application of the pulses of first voltage to the first coil, the application of the pulses of second voltage to the second coil and, optionally, the application of the pulses of further voltage to the additional coil.

According to some embodiments, the control device creates the pulses of first voltage to the first coil, the pulses of second voltage to the second coil, and, optionally, the pulses of further voltage to an additional coil. In this embodiment, the control device may be electrically coupled with the first coil, the second coil, and/or the additional coil, for instance via wires.

According to another advantageous embodiment, the method comprises transmitting information for coordination in time by the control device to a first coil control unit of the system, the first coil control unit being connected to the first coil, and to a second coil control unit of the system, the second coil control unit being connected to the second coil. The information may be provided in the form of a pulse control schedule. According to some embodiments, the control device may dynamically adjust the pulse control schedule during operation of the system. Alternatively, the pulse control schedule may remain the same while the system is being operated.

According to advantageous implementations, any one coil control unit may comprise a microcontroller, a computer, a computer processor, or another integrated circuit device. Any one coil control unit may further comprise a component for the creation of voltage pulses, so that it can apply voltage pulses to a coil that it is connected to.

According to some embodiments, the control device may notify coil control units when voltage pulses shall be activated. That is, the control device may direct the activation of voltage pulses in real-time. This may be done via data signals. For instance, the control device may send a coil activation signal to a coil control unit, and the coil control unit may apply a voltage to its respective coil in response. According to other embodiments, the control device may provide pulse control settings to the coil control units. Said pulse control settings may comprise a pulse width, a temporal offset for a rising pulse flank, a temporal offset for a falling pulse flank, and/or a pulse frequency. In other words, the control device may program or direct the coil control units to emit the voltage pulses at specific timepoints. In related embodiments, the control device may be connected to the coil control units by wire or wirelessly. According to some embodiments, the control device may be situated in a cloud, controlling the coil control units via a computer network.

According to further advantageous embodiments, the coil control units may operate without a control device. For instance, the coil control units may negotiate a schedule for pulse application among each other. Therefore, coordination according to the present method may be achieved in a decentralized manner. Alternatively, one of the coil control units may create a pulse control schedule, and transmit said pulse control schedule to other coil control units. The pulse control schedule may comprise, for each coil control unit, a temporal offset for a rising pulse flank, a temporal offset for a falling pulse flank, and/or a pulse frequency.

For wireless energy transfer from a coil to an electric cooking appliance, the principle of magnetic coupling may be employed. The coil of the system may act as a source coil. A coil of the cooking appliance may act as a receiving coil. The source coil generates an alternating electromagnetic field. The electromagnetic field induces currents in the receiving coil, which can then be used for various purposes, for instance to power the appliance or to charge its batteries. Magnetic coupling allows for energy transfer without a need for physical contact between the coils. The transferred power depends on the degree of coupling and the difference between currents of the source coil and the receiving coil. To optimize the efficiency of energy transmission through induction, techniques such as resonant inductive coupling may be employed, according to some embodiments of the invention, which increases efficiency and reduces energy losses.

A pair of coils comprising a source coil and a receiver coil in conjunction with a communication module in each coil, operating both modules at 2.4Ghz, can be employed for data transmission, in accordance with embodiments of the invention. The data transmission between the source coil communication module and the receiver coil communication module is preferably at a frequency of 2.4 GHz. The advantages of this frequency selection and its compatibility with worldwide regulations are highlighted in the following. Communication using a frequency of 2.4 GHz implies use of the radio frequency band, which is employed for wireless communication in various devices and technologies. In particular, this frequency is commonly used for communication in Wi-Fi networks, Bluetooth, Zigbee, and other wireless protocols. This band is reserved for low-power devices and noncritical applications. It provides sufficient bandwidth for data transmission, enabling wireless connectivity in home, commercial, and industrial environments.

Wireless data transmission between two communication modules can be carried out for the following purposes: According to some embodiments, data transmission may be carried out in order to identify cookware items or cooking appliances nearby the system. For instance, a cookware item or a cooking appliance may be placed upon a cooking surface of the system. According to some embodiments, the system may wirelessly receive an ID number of the cookware item or the cooking appliance. For this purpose, the cookware or cooking appliance may be equipped with a coil and a communication module, and thus be capable of transmitting its identification number to a communication module located on a coil associated with the system. If multiple items are placed upon the cooktop, different channels may be assigned to each item. Communication between the system and each item will thus proceed on a different wireless communication channel to avoid signal overlap and frequency interference.

According to some embodiments, wireless data transmission between the system and the cookware item or cooking appliance, respectively, may proceed in a bidirectional manner. That is, data may be transmitted from the system to the cookware item or cooking appliance, and vice versa. Furthermore, data in transfer may be protected by data encryption and/or authentication mechanisms. According to further embodiments, wireless data transmission may be employed to provide data updates, in particular firmware updates, to a coil control unit or another digital device located within a cookware item or a cooking appliance, respectively.

According to some embodiments, a recognition and management method for the system for induction cooking and/or powering cooking appliances may be provided. This method may be implemented in the system for induction cooking and/or powering cooking appliances, and any cookware item or cooking appliance to be connected to it. The approach ensures efficient and safe operation of items connected to the system. According to some embodiments, the recognition and management method regulates the energy consumption of cookware items and/or cooking appliances. For instance, the system may identify a cookware item or cooking appliance. This may be implemented via wireless data transmission, for instance via the transmission of an ID number, as described in the foregoing. The system may therefore be capable of identifying items placed upon an induction cooktop, for instance recognizing whether a frying pan, a pot, or an appliance such as a blender, an air fryer, or a toaster has been placed upon the induction cooktop. According to some embodiments, the recognition and management method may comprise adjusting an amount of power transferred from a coil of the system to a coil of a cookware item or a cooking appliance, depending on the type of the cookware item or the type of the cooking appliance, or depending on a certain characteristic of the cookware item or the cooking appliance. For instance, if a coil has a transmission capability of 2200 Watts, but it has been determined that a cooking appliance which has been placed above it only requires 400 Watts, then power output by the coil may be regulated accordingly, according to some embodiments.

According to an embodiment of the invention, specific controls for a cookware item or for a cooking appliance may be provided by the system upon recognition of the cookware item or cooking appliance. According to one embodiment, the system identifies a type of a cookware item or a cooking appliance via wireless data transmission and makes available at least one control to a user, the at least one control being suitable for the type of cookware item or cooking appliance which has been identified. For instance, the system may allow to adjust a speed of a blender or to control a cooking time of an air fryer by providing a specific control field that is suitable for controlling the blender or the air fryer, respectively.

According to some implementations, at least one control may be made available on a cooking surface, for instance on a cooking surface of an induction cooktop. According to some embodiments, at least one control may be implemented by a touch interface and/or a display device integrated within the cooking surface. According to embodiments, properties of the control may be determined by the system depending on the type of cookware item or cooking appliance which has been detected.

According to further advantageous embodiments, a method for load regulation for the system for induction cooking and/or powering cooking appliances may be implemented. According to some embodiments, the method may comprise the following step: Detecting a total power consumption of the system exceeds a predetermined value and reducing a power provided to at least one coil of the system. The system may comprise a first coil, a second coil, and optionally at least one additional coil ("further coil"). For purposes of load regulation, a load distribution algorithm may be employed. In order to detect that the power consumption exceeds the predetermined value, the coils may be monitored in real-time, according to some embodiments. According to some embodiments, the power consumption of each coil is reduced proportionally if it is detected that the power consumption exceeds the predetermined value. This implies that the power consumption of each coil is reduced by a certain percentage. The percentage may be determined dynamically. In particular, the percentage may be determined thus that it causes a reduction of the power consumption to the predetermined value or below the predetermined value, according to advantageous embodiments.

According to other embodiments, the power consumption of each coil may be reduced by an absolute amount, preferably by an equal amount for each coil. This amount may be determined dynamically. In particular, an amount may be chosen which ensures that the total power consumption is reduced to the predetermined value or below the predetermined value, according to some embodiments. According to other embodiments, the power supplied to the coils is reduced in such a manner that the coils function with an optimal efficiency. Aforementioned method for load regulation can prevent consumption peaks that exceed the maximum capacity of the available electrical supply.

According to some embodiments, this method may comprise measuring a voltage and/or a current. The voltage and/or current may be measured separately at each coil.

According to other embodiments, in order to determine the power consumption, the method may also comprise determining a power requirement of a cooking appliance that is being powered by the system. Related information may be obtained via wireless data transmission between the cooking appliance and the system, as specified above. For instance, an ID number of a cooking appliance may be associated with a certain maximum power consumption or a certain power consumption profile. According to other variants of the invention, the system may receive a value indicating a current energy consumption of the cooking appliance, determined by the cooking appliance via an internal measurement and transmitted wirelessly by the cooking appliance to a coil associated with the system. The regulation of power consumption by individual coils may be achieved by various means, in particular by means which are commonly employed for regulating a power supplied via induction coils. According to some embodiments, power regulation may be achieved by changing a frequency of voltage pulses applied to a coil, by changing a pulse width of voltage pulses being applied to the coil, and/or by changing a peak voltage of pulses being applied to the coil.

According to other embodiments, a usage detection method for the system for induction cooking and/or powering cooking appliances may be implemented. In particular, the usage detection method may be aimed at determining how a piece of cookware that is being heated by the system is being used. For instance, the system may determine whether a pan is being used for frying, whether a pot is being used for boiling water, or whether a grill is being used for grilling food. According to some embodiments, the system may also determine at least one property of a cookware item being heated by the system. The at least one property may be a size of the cookware item, a material of the cookware item and/or at least one further characteristic of the cookware item. According to further advantageous embodiments, the method for gathering this information may comprise the following steps: Measuring a temperature of a cookware item, and subsequently determining, based on the temperature, at least one property of the cookware item or of a food preparation process associated with the cookware item.

According to some embodiments, a temperature of the cookware item may be measured over time in order to determine the at least one property of the cookware item. The temperature may be characteristic for a specific cookware item. It may further be characteristic for a certain type of cooking process, such as frying, boiling, or grilling food. According to some embodiments, after determining the property of the cookware item or an associated food preparation process, the system may adjust its energy consumption and/or an amount of power supplied to at least one of the coils of the system. According to another embodiment, the system may, after determining the property of the cookware item or an associated food preparation process, provide a recommendation to a user for food preparation. According to some implementations, the temperature may be measured by a temperature sensor of the system, for instance a temperature sensor integrated into the cooktop or a temperature sensor located nearby or at a coil of the system.

The previously described methods for recognition and management, load regulation and/or usage detection may be implemented by the control device of the system. The control device may be a microcontroller, a computer or a related electronic device. Preferably, the control device centrally controls execution of the recognition and management method, the load regulation method and/or the usage detection method. The control device may be directly electrically coupled with the coils so that it may apply voltage pulses to them, for instance over a direct wire connection. In other embodiments, the control device may communicate with coil control units which are linked to the respective coils, thus indirectly controlling coils of the system. According to further embodiments, execution of the methods for recognition and management, load regulation and/or usage detection may be directed in a decentralized manner, e. g., by coil control units being assigned to each coil. According to further embodiments, execution of the above-mentioned methods may be directed at least partially by a device which is located in the cloud.

According to another aspect, the present invention relates to a system for induction cooking and/or powering cooking appliances, the system comprising a first coil for generating a first alternating electromagnetic field and a second coil for generating a second alternating electromagnetic field, the system being configured to carry out at least the steps of applying pulses of first voltage to the first coil, the pulses of first voltage to the first coil being separated in time from each other so that the first coil generates the first alternating electromagnetic field. Furthermore, the system is configured to carry out at least the steps of applying pulses of second voltage to the second coil, the pulses of second voltage to the second coil being separated in time from each other so that the second coil generates the second alternating electromagnetic field. The pulses of first voltage to the first coils and the pulses of second voltage to the second coil are coordinated in time with each other. The system may be configured in such a way that it can carry out the procedure according to the method described above, and optionally any of its various embodiments. The coils may be understood to be induction coils, according to embodiments of the invention. According to some embodiments, each coil may feature a fuse, for instance in its centre, providing protection against overloads and other electrical faults.

According to some embodiments, the system may be an induction cooktop or hob. Said induction cooktop or hob may feature a cooking surface upon which cookware items and/or cooking appliances can be placed. The cooking surface may feature at least two placement areas allocated for placing the cookware items and/or cooking appliances. For instance, the first coil of the system may be located beneath a first placement area of the cooking surface, and the second coil of the system may be located beneath a second placement area of the cooking surface. The cooking surface may feature at least one control. The control can be a button, slider, LCD display or similar. According to some embodiments, the control may be implemented by at least one touch control field provided by the cooking surface or integrated within the cooking surface. The cooking surface may feature at least one display device, such as an LED device. According to some embodiments, the display device may display data related to power consumption, power regulation, and power distribution. For instance, the power consumed by each coil, the total power consumption, and/or the energy efficiency may be displayed. Thereby, the benefits of the present system can be visualized to users of the system.

According to some embodiments, the system may comprise a control device for coordinating in time the pulses of first voltage to the first coil and the pulses of second voltage to the second coil. Besides the first coil and the second coil, the system may comprise at least one additional coil. The control device may be coupled directly to the first coil, the second coil, and the optional at least one additional coil. According to other embodiments, at least one of the coils may be equipped with a coil control unit of its own. This coil control unit may be a microcontroller, a processor, or a different type of electronic unit for controlling the coil. In particular, the coil control unit may be capable of applying voltage pulses to the coil that it is connected to. According to some embodiments, one coil control unit may be connected to multiple coils. According to further embodiments, the system may feature at least one wired data connection between the control device and at least one of the coils of the system. According to another embodiment, the system may feature a data bus for providing a data connection between the control device and at least one coil of the system. According to advantageous embodiments, the control device is communicatively coupled with at least one touch control field and/or at least one display device of the system. Therefore, the control device can receive user input and cause information to be displayed to a user.

According to another aspect, the present invention relates to a control device for a system for induction cooking and/or powering cooking appliances, the control device being configured to carry out the steps comprising: Causing the system to apply pulses of first voltage to a first coil of the system, the pulses of first voltage being separated in time from each other so that the first coil generates a first alternating electromagnetic field; as well as causing the system to apply pulses of second voltage to a second coil of the system, the pulses of second voltage being separated in time from each other so that the second coil generates a second alternating electromagnetic field; wherein the pulses of first voltage to the first coil and the pulses of second voltage to the second coil are coordinated in time with each other. The control device may cause the application of the voltage pulses directly, by generating the respective voltage pulses, or indirectly, by causing another system component or other system components to generate the respective voltage pulses. The control device may be configured to cause the system for induction cooking and/or powering cooking appliances to carry out the method described above, and optionally any of its various embodiments. In addition, the control device may be combined with the system as described above.

The control device may be a microcontroller, a computer, a computer processor, or another integrated circuit device. According to some embodiments, the control device may comprise means for applying a voltage to one or more coils. According to some embodiments, the control device may comprise at least one data transmission device. For instance, the control device may comprise means for wired or wireless data transmission. In particular, the control device may feature at least one UART port. UART (universal asynchronous receiver-transmitter) ports are used for serial communication between the control device and other devices. They allow the transmission and reception of data in a serial format, which facilitates connecting to devices such as displays or external communication modules.

According to some embodiments, the control device may feature at least one SPI port. A SPI (serial peripheral interface) port is a synchronous communication bus used for data transfer which can be used for communication between the control device and peripheral devices, such as sensors or external memories. It provides high-speed communication and allows data transmission in both directions. According to further advantageous embodiments, the control device may feature at least one I2C port. An I2C (inter-integrated circuit) port is another serial communication bus that allows multiple devices to be connected to the control device. This port is characterized by its two-way communication capability, which means that both the control device and peripheral devices can send and receive data. According to some embodiments, the control device may also feature a control port. The programming port provides an interface for programming and configuring the control device and the system for induction cooking and/or powering cooking appliances as described herein, allowing to set parameters and to customize system operation according to country-specific regulations.

According to another aspect, the present invention relates to a computer program product for controlling wireless power transmission by a system for induction cooking and/or powering cooking appliances, the computer program product comprising instructions which, when the program is executed by a computer, cause the computer to carry out the steps comprising: Directing the system to apply pulses of first voltage to a first coil of the system, the pulses of first voltage being separated in time from each other so that the first coil generates a first alternating electromagnetic field; and directing the system to apply pulses of second voltage to a second coil of the system, the pulses of second voltage being separated in time from each other so that the second coil generates a second alternating electromagnetic field; wherein the pulses of first voltage to the first coil and the pulses of second voltage to the second coil are coordinated in time with each other. Said computer program may be suitable for execution by a computer, such as a computer being a control device or being part of a control device. In the context of the present invention, the term computer is to be understood broadly, encompassing various computer devices, for instance microcontrollers, CPUs, and other integrated circuit devices. According to some embodiments, the computer program product may be suitable for execution by multiple devices that are part of the system, for instance by multiple coil control units, each coil control unit being assigned to at least one coil of the system.

According to another independent aspect, the present invention relates to a computer program product comprising instructions to cause the system of any of claim 12 or 13, or the control device of claim 14, to execute the steps of the method of any of claims 1 to 11.

According to another embodiment, the system can comprise an automatic detection unit. The system (or respectively the cooktop or hob) then comprises an automatic detection module that, when a cooking appliance and/or an electrical appliance is put on the system, the system or hob detects that something ("an item") is on it and an advanced standby mode is activated. When the advanced standby mode is activated, a data transmission is activated, the data transmission being arranged to detect which item has been placed on the surface, in particular on the specific coil. The automatic detection module is arranged to receive a user's message, the user's message comprising information about what should be done with the kitchen appliance or electrical appliance ("placed item"). It is preferred that, when a specific predetermined time elapses and no action is taken on the control (for example to activate the cooking mode or the power transfer mode), that the automatic detection module turns off again the advanced standby mode, so that once again only the automatic detection module is in operation, but not the advanced standby mode including for example the mentioned data transmission. The suggested automatic detection unit and automatic detection module have the advantage over conventional standby systems that the power consumption is reduced. In particular, the suggested automatic detection unit and automatic detection module can be arranged to consume less than 5 W of power. A standby mode according to the prior art usually has a continuous consumption of power, usually at least of 200 W.

According to another embodiment, the system can comprise an item recognition module, the item recognition module being arranged to receive information sent by an item placed on the system, such as by a cooking appliance, about the characteristics of the placed item. The information sent can include a specific program or schedule for example for controlling the coils which program or schedule is preferred by the specific placed item. Accordingly, the algorithm for the wireless power transmission could be updated by the placement of said specific item/cooking appliance. Also, new features could be included into the system in this way.

To make the aforesaid features and advantages of the invention more comprehensible, several embodiments accompanied with drawings are described in detail as follows:
- Fig. 1: is a schematic illustration of a schedule for applying pulses of first voltage to a first coil of a system for induction cooking and/or powering cooking appliances, and applying pulses of second voltage to a second coil of said system, according to an embodiment of the present invention;
- Fig. 2: is a schematic illustration of a schedule for applying pulses of first voltage to a first coil of a system for induction cooking and/or powering cooking appliances, and applying pulses of second voltage to a second coil of said system, according to another embodiment of the present invention;
- Fig. 3: is a schematic illustration of a schedule for applying pulses of first voltage to a first coil of a system for induction cooking and/or powering cooing appliances, applying pulses of second voltage to a second coil of said system, and applying pulses of further voltage to an additional coil of said system, according to another embodiment of the present invention;
- Fig. 4: is a schematic illustration of a program that generates input control pulses (A) to cause output voltage pulses (1) to a first coil of a system for induction cooking and/or powering cooking appliances, in accordance with one embodiment of the present invention;
- Fig. 5: is a schematic illustration of a program that generates input control pulses (B) to cause output voltage pulses (2) to a second coil of a system for induction cooking and/or powering cooking appliances, in accordance with one embodiment of the present invention;
- Fig. 6: is a schematic illustration of the time synchronisation of control pulses (A) causing output voltage pulses (1) to a first coil and control pulses (B) causing output voltage pulses (2) to a second coil, in accordance with another embodiment of the present invention;
- Fig. 7: is a schematic illustration of the maximum energy consumption (A) of a system according to one embodiment of the present invention compared to the maximum energy consumption (B) of a conventional induction cooking system;
- Fig. 8: is a schematic illustration of an induction cooktop according to an embodiment of the present invention;
- Fig. 9: is a schematic illustration of a system according to the present invention, comprising a control device and multiple coils; and
- Fig. 10: is a schematic illustration of a system according to the present invention, comprising a control device, multiple coils, and multiple coil control units being assigned to the coils.

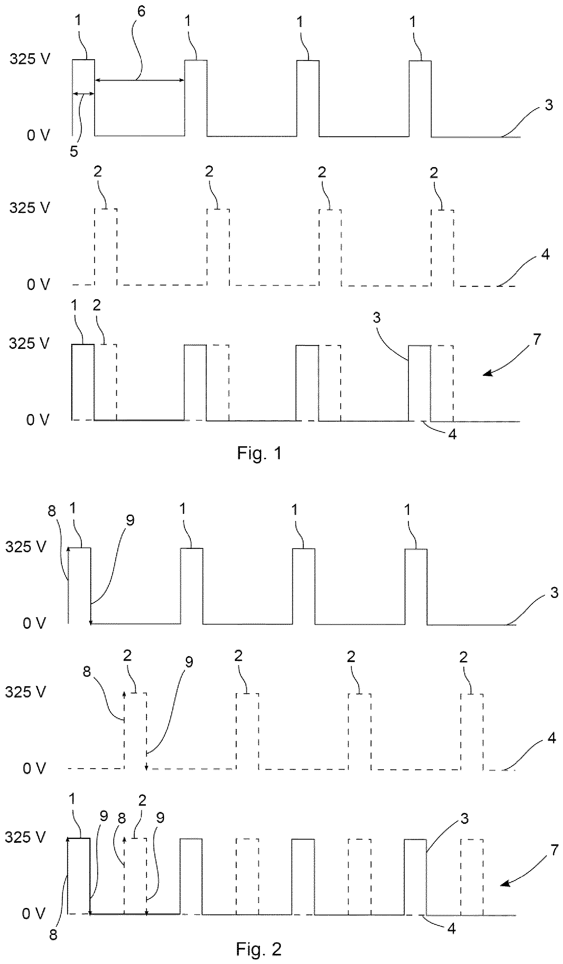

Fig. 1 is a schematic illustration of a schedule for applying pulses of first voltage 1 to a first coil of a system for induction cooking and/or powering cooking appliances, and for applying pulses of second voltage 2 to a second coil of said system, according to an embodiment of the present invention. A first voltage curve 3 depicts a voltage being applied to the first coil over time. A second voltage curve 4 depicts a voltage being applied to the second coil over time. Each voltage pulse has a certain pulse width 5. In the present example, all voltage pulses have the same pulse width 5. It can further be observed that pulses are spaced temporally apart from each other, i.e., there are temporal gaps 6 between them. Voltages fluctuate between 325 V, while voltage pulses are being applied, and 0 V during the temporal gaps 6 between the voltage pulses. In the present example, the first coil is set to 25 % power consumption, and the second coil is set to 25 % power consumption. This power setting corresponds to the pulse width 5, which is set to 25 % of a total cycle length.

The pulses of first voltage 1 (or so-called "voltage pulses of first coil") and the pulses of second voltage 2 (or so-called "voltage pulses of first coil") are applied to the first coil and the second coil, respectively, at a frequency of 30 kHz. This implies that there are 30 thousand cycles per second, and in each cycle, one pulse is applied to the first coil and to the second coil, respectively. Furthermore, there is a temporal offset between the first curve 3 and the second curve 4 by one fourth of a cycle. Therefore, the pulses of first voltage 1 of the first curve 3 do not have a temporal overlap with the pulses of second voltage 2 of the second curve 4. This can be observed in an overlay 7 as depicted below in a third row in Fig. 1, wherein the first curve 3 and the second curve 4 have been placed above each other. Thereby, overlaps and interferences between electromagnetic waves emitted by the first coil and the second coil are avoided.

Fig. 2 is a schematic illustration of a schedule for applying pulses of first voltage 1 to a first coil of a system for induction cooking and/or powering cooking appliances, as well as for applying pulses of second voltage 2 to a second coil of said system, according to another embodiment of the present invention. A first voltage curve 3 depicts a voltage being applied to the first coil over time, and a second voltage curve 4 depicts a voltage being applied to the second coil over time. The first voltage pulses 1 and the second voltage pulses 2 have rising voltage flanks 8 and falling voltage flanks 9. According to the present embodiment, a temporal offset between the first voltage curve 3 and the second voltage curve 4 has been selected in such a way that rising voltage flanks 8 and falling voltage flanks 9 of the pulses of first voltage 1 do not coincide with rising voltage flanks 8 and falling voltage flanks 9 of the pulses of second voltage 2. This can be observed in an overlay 7 of the first voltage curve 3 and the second voltage curve 4. It can also be observed that the pulses of first voltage 1 to the first coil and the pulses of second voltage 2 to the second coil are coordinated in time such that rising voltage edges and falling voltage edges of the pulses of first voltage 1 do not coincide with rising voltage edges and falling voltage edges of the pulses of second voltage 2.

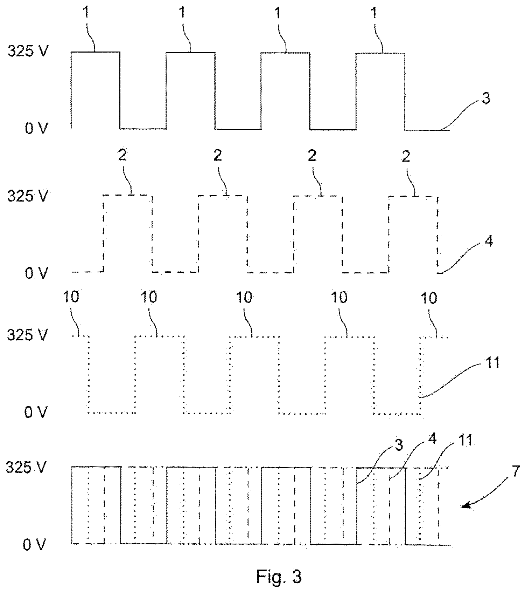

Fig. 3 is a schematic illustration of a schedule for applying pulses of first voltage 1 to a first coil of a system for induction cooking and/or powering cooking appliances, applying pulses of second voltage 2 to a second coil of said system, and for applying pulses of further voltage 10 to an additional coil of said system, according to another embodiment of the present invention. A first voltage curve 3 depicts a voltage being applied to the first coil over time, a second voltage curve 4 depicts a voltage being applied to the second coil over time, and a further voltage curve 11 depicts a voltage being applied to the additional coil over time. Apart from only operating two coils at a time, it is possible that embodiments may also operate three, four or more coils at a time. In the present embodiment, apart from the first coil and the second coil, the additional coil is operated as a third coil, wherein the pulses of further voltage 10 are applied to the additional coil.

Previously, it became evident that a temporal offset between voltage curves can be employed to completely avoid a temporal overlap between pulses. In the present embodiment according to Fig. 3, a temporal overlap between pulses is present. However, the application of the pulses of first voltage 1, the pulses of second voltage 2 and the pulses of further voltage 10 is coordinated in such a way that a total power consumption by the system is stabilized. This is achieved by shifting the second voltage curve 4 by one third of a cycle, and by shifting the further voltage curve 11 by two thirds of a cycle. An overlay 7 combines the first voltage curve 3, the second voltage curve 4 and the further voltage curve 11. It is apparent that there is no overlap of three pulses at the same time. Therefore, exceedingly high power consumption peaks are avoided, which has a stabilizing effect on a total power consumption. Those skilled in the arts will readily appreciate that based on the general principle of temporal shifting of voltage curves/voltage pulses, power peaks can also be reduced in other scenarios with a differing number of coils, different pulse widths, and/or different pulse frequencies.

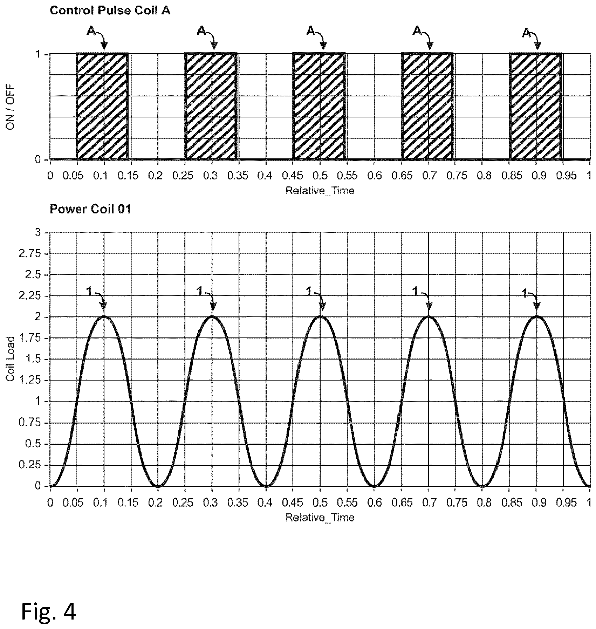

Fig. 4 further shows graphics referring to a first coil, while the upper part of Fig. 4 depicts pulses A in terms of "ON" and "OFF"-signals on the vertical axis leading to pulses of first voltage 1 to the first coil over a relative time depicted in the horizontal axis. The lower part of Fig. 4 depicts the resulting coil load (vertical axis) and its respective development again over time, represented by the same horizontal axis of a relative time as in the upper part of Fig. 4. Hence, in the lower part of Fig. 4, the pulses of first voltage 1 to the first coil and its development in time are depicted. Fig. 4 thereby shows input control pulses A to cause output voltage pulses 1 to the first coil of a system for induction cooking and/or powering cooking appliances according to an embodiment of the invention.

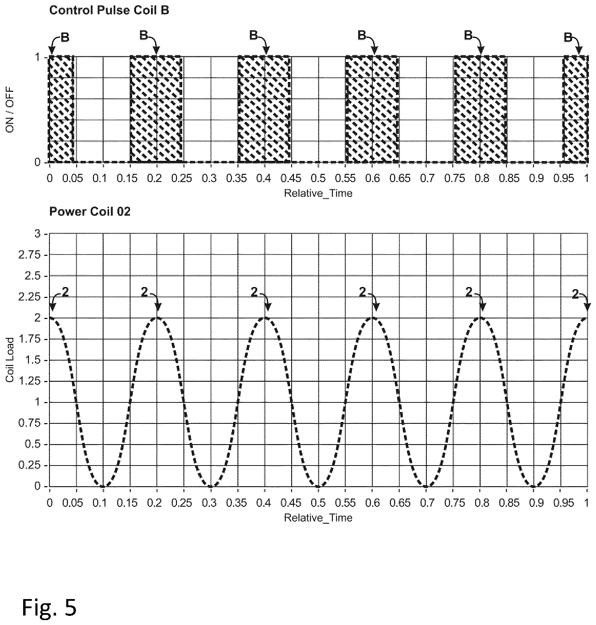

Turning now to Fig. 5, the same system is shown as already depicted in Fig. 4, however, Fig. 5 now refers to a second coils within the embodiment of the system. The upper part of Fig. 5 depicts pulses B in terms of "ON" and "OFF"-signals on the vertical axis leading to pulses of second voltage 2 to the second coil over a relative time depicted in the horizontal axis. The lower part of Fig. 5 depicts the resulting coil load (vertical axis) and its respective development again over time, represented by the same horizontal axis of a relative time as in the upper part of Fig. 5, as well as in Fig. 4. Hence, in the lower part of Fig. 5, the pulses of first voltage 2 to the first coil and its development in time are depicted. Fig. 5 thereby shows input control pulses B to cause output voltage pulses 2 to the second coil of a system for induction cooking and/or powering cooking appliances according to an embodiment of the invention. Fig. 5 and the relation to the first coil are depicted in solid lines while Fig. 4 and the relation to the second coil is depicted in dotted lines.

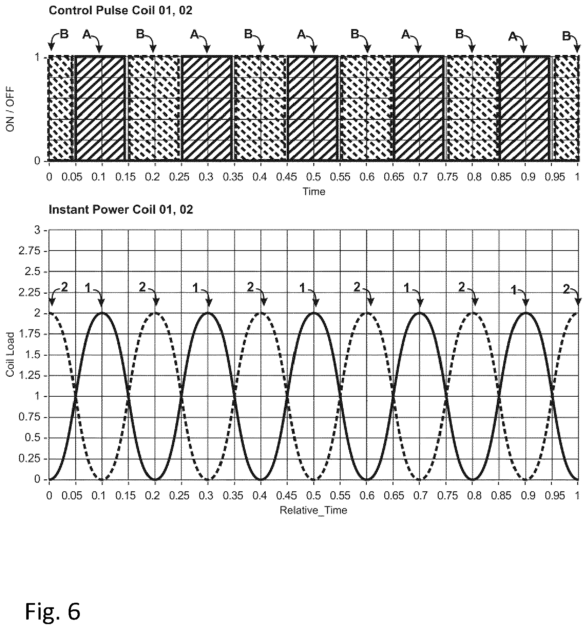

Turning now to Fig. 6, the unification of Figs. 4 and 5 is shown. Hence, the synchronisation of the pulses of voltage to the first and second coil is depicted. It can be seen (upper part of Fig. 6) that the "ON-" and "OFF-signals" are coordinated in time, as well as the resulting coil load is coordinated in time. In particular, the resulting voltage edges, i.e. the maxima of coil load, for the first coil (cf. pulses of first voltage 1) and for the second coil (cf. pulses of second voltage 2) are coordinated in time with each other and, in particular, are offset to each other.

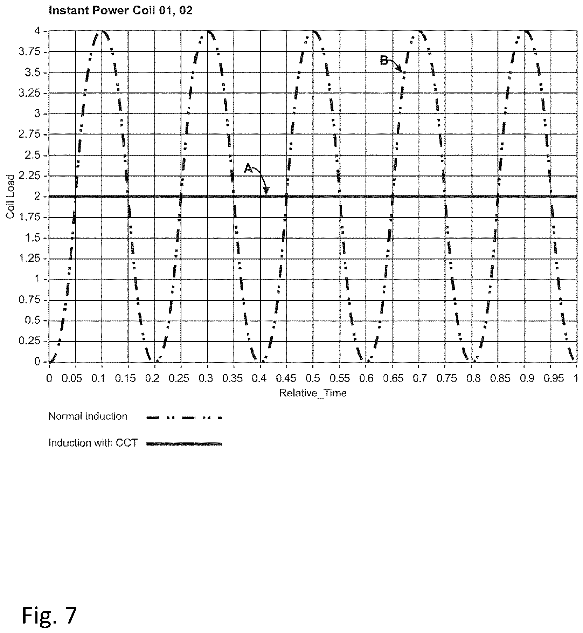

Turning now to Fig. 7, the resulting advantages of the embodiment of the invention, as by way of an example described and depicted before with reference to Figs. 4 to 6, can be seen. Coil loads of conventional induction plate are depicted with a two-dot line and the reference B (indicated as "normal induction" in the legend below the graph) while the coil loads according to the embodiment of the invention is depicted with the solid line and the reference A (indicated as "induction with CCT" in the legend below the graph). Fig. 7 thereby shows an illustration of the maximum energy consumption A of a system according to one embodiment of the present invention compared to the maximum energy consumption B of a conventional induction cooking. The coil load and energy consumption of the system according to the embodiment of the invention is advantageously lower as the coil and energy consumption load according to a comparable normal induction.

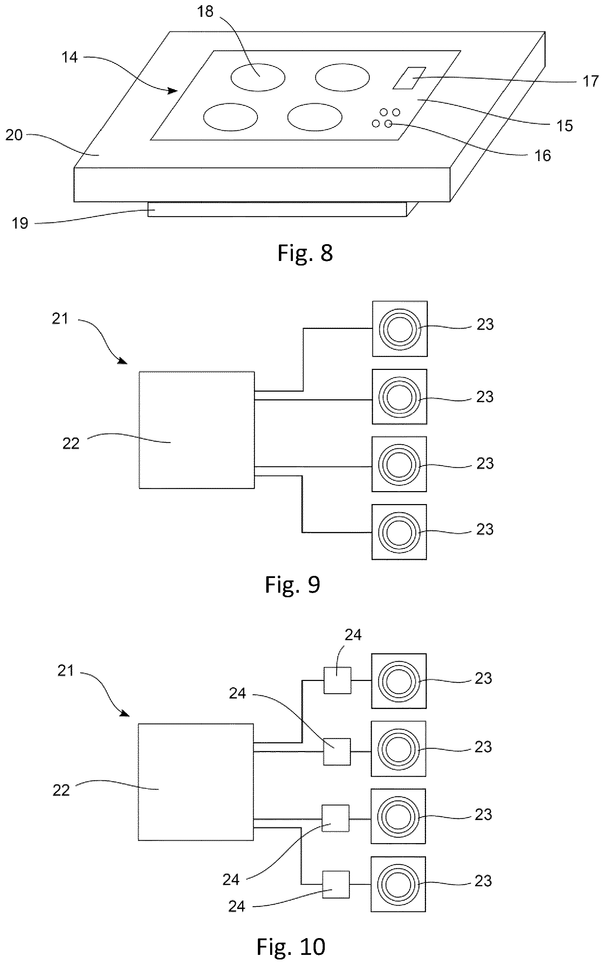

Fig. 8 is a schematic illustration of an induction cooktop 14 (or hob) according to an embodiment of the present invention. The induction cooktop 14 comprises a cooking surface 15, on which cookware items and cooking appliances may be placed. The cooking surface 15 features multiple controls 16 and a display device 17. In addition, it has four placement areas 18 for placing the cookware items and cooking appliances. An induction coil (not specifically depicted in Fig. 8, but indicated as coils 23 by way of an example in Figs. 9 and 10) is located under each placement area 18 of the induction cooktop 14. Thus, cookware items placed upon the placement areas 18 may be heated, and cooking appliances placed upon the placement areas 18 may be supplied with power inductively. The induction coils are integrated into a module 19 of the induction cooktop 14. The module 19 is mounted beneath a kitchen countertop 20 that features the induction cooktop 14.

Fig. 9 is a schematic illustration of a system 21 according to the present invention, comprising a control device 22 and multiple coils 23. According to this embodiment, the control device 22 directly applies voltage pulses to each of the coils 23. The control device 22 applies the voltage pulses to the coils 23 in a coordinated manner over time, such that overlaps and interferences of electromagnetic waves emitted by the different coils 23 are avoided. In consequence, the coils 23 may heat up cookware items or power cooking appliances which have been placed into their vicinity.

Fig. 10 is a schematic illustration of a system 21 according to the present invention, comprising a control device 22, multiple coils 23, and multiple coil control units 24 being connected to the coils 23. According to this embodiment, the control device 22 indirectly controls the application of voltage pulses to the coils 23. The coil control units 24 can apply voltage pulses to the coils 23. The control device 22 provides pulse control settings to the coil control units 24 via data connections. Said pulse control settings comprise a pulse width, a temporal offset for a rising pulse edge and/or flank, a temporal offset for a falling pulse edge and/or flank, and a desired pulse frequency. According to the pulse control settings, the coil control units 24 apply the voltage pulses to the coils 23 in a coordinated manner over time, such that overlaps and interferences of electromagnetic waves emitted by the different coils 23 are avoided.

### List of reference signs

- 1.: Pulse of first voltage
- 2.: Pulse of second voltage
- 3.: First voltage curve
- 4.: Second voltage curve
- 5.: Pulse width
- 6.: Gap
- 7.: Overlay
- 8.: Rising voltage flank
- 9.: Falling voltage flank
- 10.: Pulse of further voltage
- 11.: Further voltage curve
- 12.: First power consumption curve
- 13.: Second power consumption curve
- 14.: Induction cooktop
- 15.: Cooking surface
- 16.: Control
- 17.: Display device
- 18.: Placement area
- 19.: Module
- 20.: Kitchen countertop
- 21.: System
- 22.: Control device
- 23.: Coil (first coil, second coil, additional coil(s))
- 24.: Coil control unit

## Claims

1. A method for wireless power transmission by a system (21) for induction cooking and/or powering cooking appliances, the method comprising:
- applying pulses of first voltage (1) to a first coil (23) that is part of the system (21), wherein the pulses of first voltage (1) are separated in time from each other so that the first coil (23) generates a first alternating electromagnetic field; and
- applying pulses of second voltage (2) to a second coil (23) forming part of the system (21), wherein the pulses of second voltage (2) are separated in time from each other so that the second coil (23) generates a second alternating electromagnetic field;
wherein the pulses of first voltage (1) to the first coil (23) and the pulses of second voltage (2) to the second coil (23) are coordinated in time with each other.

2. The method according to claim 1, wherein the pulses of first voltage (1) to the first coil (23) and the pulses of second voltage (2) to the second coil (23) are applied with a relative offset in time from each other.

3. The method according to claim 1 or claim 2, wherein the pulses of first voltage (1) to the first coil (23) and the pulses of second voltage (2) to the second coil (23) are coordinated in time such that there is only partial or no temporal overlap between the pulses of first voltage (1) and the pulses of second voltage (2).

4. The method according to any of the preceding claims, wherein the pulses of first voltage (1) to the first coil (23) and the pulses of second voltage (2) to the second coil (23) are coordinated in time such that rising voltage edges and/or falling voltage edges of the pulses of first voltage (1) do not coincide with rising voltage edges and/or falling voltage edges of the pulses of second voltage (2).

5. The method according to any of the preceding claims, wherein the pulses of first voltage (1) to the first coil (23) and the pulses of second voltage (2) to the second coil (23) are coordinated in time such that interference between the first alternating electromagnetic field generated by the first coil (23) and the second alternating electromagnetic field generated by the second coil (23) is reduced.

6. The method according to any of the preceding claims, wherein the application of the pulses of first voltage (1) to the first coil (23) and the application of the pulses of second voltage (2) to the second coil (23) are coordinated in time in such a way that a total power consumption by the system (21) is stabilized.

7. The method according to any of the preceding claims, further comprising:
- applying pulses of further voltage (10) to an additional coil (23) forming part of the system (21), wherein the pulses of further voltage (10) are separated in time from each other so that the additional coil (23) generates an additional alternating electromagnetic field,
wherein the pulses of further voltage (10) are coordinated in time with reference to the pulses of first voltage (1) to the first coil (23) and the pulses of second voltage (2) to the second coil (23).

8. The method according to any of the preceding claims, the system (21) being an induction cooktop (14).

9. The method according to any of the preceding claims, the pulses of first voltage (1) and the pulses of second voltage (2) being applied to the first coil and the second coil, respectively, at a frequency of 30 kHz.

10. The method according to any of the preceding claims, wherein the application of the pulses of first voltage (1) to the first coils (23) and the pulses of second voltage (2) to the second coil (23) is coordinated by a control device (22) of the system (21).

11. The method according to claim 10, the method further comprising:
- transmitting information for coordination in time by the control device (22) to a first coil control unit (24) of the system (21), the first coil control unit (24) being connected to the first coil (23), and to a second coil control unit (24) of the system (21), the second coil control unit (24) being connected to the second coil (23).

12. A system (21) for induction cooking and/or powering cooking appliances, the system (21) comprising a first coil (23) for generating a first alternating electromagnetic field and a second coil (23) for generating a second alternating electromagnetic field, the system (21) being configured to carry out at least the following steps:
- applying pulses of first voltage (1) to the first coil (23), the pulses of first voltage (1) being separated in time from each other so that the first coil (23) generates the first alternating electromagnetic field; and
- applying pulses of second voltage (2) to the second coil (23), the pulses of the second voltage (2) being separated in time from each other so that the second coil (23) generates the second alternating electromagnetic field;
wherein the pulses of first voltage (1) to the first coil (23) and the pulses of second voltage (2) to the second coil (23) are coordinated in time with each other.

13. The system (21) according to claim 12, further comprising a control device (22) to coordinate in time the first voltage pulses (1) and the second voltage pulses (2).

14. A control device (22) for a system (21) for induction cooking and/or powering cooking appliances, the control device (22) being configured to carry out the steps comprising:
- causing the system (21) to apply pulses of first voltage (1) to a first coil (23) of the system (21), the pulses of first voltage (1) being separated in time from each other so that the first coil (23) generates a first alternating electromagnetic field; and
- causing the system (21) to apply pulses of second voltage (2) to a second coil (23) of the system (21), the pulses of second voltage (2) being separated in time from each other so that the second coil (23) generates a second alternating electromagnetic field;
wherein the pulses of first voltage (1) to the first coil (23) and the pulses of second voltage (2) to the second coil (23) are coordinated in time with each other.

15. A computer program product for controlling wireless power transmission by a system (21) for induction cooking and/or powering cooking appliances, the computer program product comprising instructions which, when the program is executed by a computer, cause the computer to carry out the steps comprising:
- directing the system (21) to apply pulses of first voltage (1) to a first coil (23) of the system (21), the pulses of first voltage (1) being separated in time from each other so that the first coil (23) generates a first alternating electromagnetic field; and
- directing the system (21) to apply pulses of second voltage (2) to a second coil (23) of the system (21), the pulses of second voltage (2) being separated in time from each other so that the second coil (23) generates a second alternating electromagnetic field;
wherein the pulses of first voltage (1) to the first coil (23) and the pulses of second voltage (2) to the second coil (23) are coordinated in time with each other.
